# EUROPEAN PATENT APPLICATION

(11) **EP 4 707 147 A1**
(43) Date of publication of application: **11.03.2026**
(21) Application number: 25200428.8
(22) Date of filing: 05.09.2025
(51) Int. Cl.: B62K 23/02, B62L 3/02, B62M 25/08, B62J 43/30

(54) **INTEGRATED BICYCLE CONTROL WITH EASY ACCESS TO THE BATTERY**

(30) Priority: 09.09.2024 IT 202400020062
(71) Applicant: Campagnolo S.r.l., 36100 Vicenza (VI) (IT)
(72) Inventor: Minto, Marco, Padova (IT)
(74) Representative: Montanari, Daniele

(57) **Abstract**

The integrated control comprises:
- a control body (11),
- a rear abutment zone (12) of the control body (11), intended to be in contact with a handlebar of the bicycle when the control is mounted on the handlebar,
- a brake lever (18) pivoted to the control body (11) according to a pivot axis (X) transverse to the control body (11), spaced from the rear abutment zone (12),
- an actuator (35) for driving the gearshift,
- a cavity (20) formed inside the control body (11),
- a gearshift drive electronic board (32), housed inside the cavity (20) in a first seat (31),
- a battery (53) for powering the electronic board (32), housed inside the cavity (20),
- a first opening (30) of the cavity (20), through which access to the electronic board (32) is possible,
- a second opening (50) of the cavity (20), distinct and separate from the first opening (30), through which access to the battery (53) is possible.

## Description

The present invention concerns an integrated bicycle control. Such an integrated control (also referred to as control in the following) includes a brake lever and at least one actuator for actuating the rear gearshift or the front gearshift (also referred to as derailleur).

In the following - unless explicitly stated otherwise - the spatial references (such as high, low, longitudinal, transverse, lateral, front, rear, etc.) are to be understood as referring to the bicycle on which the control is mounted. In addition - always unless explicitly indicated otherwise - the spatial references "inner" and "outer" are used to indicate a transverse direction facing respectively towards the centre of the bicycle or in the opposite direction.

An integrated bicycle control includes a brake lever and at least one actuator for actuating the rear gearshift or front gearshift (also called a derailleur). In the following, the term "gearshift" means indifferently a rear or front gearshift.

The actuators of an integrated control can be mounted on the brake lever or on the body of the integrated control; sometimes, an actuator mounted on the brake lever and an actuator on the body of the integrated control are provided.

Electrically operated gearshifts have been known for some time, in which the displacement of the chain necessary to obtain the shifting is obtained through a motorized electrical system, controlled and driven by an electronic board on which the cyclist acts by means of actuators provided on the integrated control.

The electronic board is normally housed in a cavity obtained in the control body; in this cavity, the battery necessary for powering the electronic board is also housed.

Object of the present invention is to facilitate access to the electronic board and to the battery.

This object is achieved by an integrated control according to claim 1; preferred features are reported in the dependent claims.

In particular, the integrated control for a gearshift and a brake of a bicycle comprises:
- a control body,
- a rear abutment zone of the control body, intended to be in contact with a handlebar of the bicycle when the control is mounted on the handlebar,
- a brake lever pivoted to the control body according to a pivot axis transverse to the control body, spaced from the rear abutment zone,
- an actuator for driving the gearshift,
- a cavity formed inside the control body,
- a gearshift drive electronic board, housed inside the cavity in a first seat,
- a battery for powering the electronic board, housed inside the cavity,
- a first opening of the cavity, through which access to the electronic board is possible,
   characterized by further comprising
- a second opening of the cavity, distinct and separate from the first opening, through which access to the battery is possible.

The presence of the two distinct openings is advantageous both for mounting the integrated control, and above all for all maintenance interventions. In fact, to access the battery (for example to replace it when dead) it is not necessary to also remove the electronic board; conversely, to access the electronic board (for example to replace it in case of failure) it is not necessary to also remove the battery. The initial mounting is also facilitated, as the battery and electronic board can be placed in their place independently.

Preferably, the control body comprises an inner flank, an outer flank, an upper side and a lower side, wherein the first opening is placed on the inner flank of the control body.

The preferred position for the first opening is on the inner flank of the control body, thus where the actuator is placed.

In an embodiment, the control body comprises an inner flank, an outer flank, an upper side and a lower side, wherein the second opening is placed on the outer flank of the control body.

In an embodiment, the control body comprises an inner flank, an outer flank, an upper side and a lower side, wherein the second opening is placed on the lower side of the control body.

In an embodiment, the control body comprises an inner flank, an outer flank, an upper side and a lower side, wherein the second opening is placed on the upper side of the control body.

The position of the second opening may be on any of the other flanks or sides of the control body. For aesthetic reasons, placement on the lower side, which is not very visible, may be preferred; for convenience of access, however, placement on the upper side may be preferred; a good compromise is offered by placement on the outer flank, which guarantees comfortable access and not excessive visibility.

Preferably, the actuator is placed on the control body and the first opening is placed at the actuator.

Preferably, the first opening is closed by a first plate, on which the actuator is mounted.

In this way, the distance between the actuator and the electronic board is minimal and therefore it is easier to ensure that the actuation of the actuator is transferred to the electronic board.

Preferably, the second opening is closed by a second plate.

Preferably, the integrated control comprises a board supporting the battery, housed in a second seat formed in the cavity.

Preferably, the electronic board is provided with a first electrical connector and the board supporting the battery is provided with a second electrical connector, wherein the first electrical connector is removably connected to the second electrical connector.

Preferably, the second electrical connector is mounted at an end of a flexible cable.

In this way, it is easier to assemble and disassemble the board supporting the battery and the electronic board: the electrical connection can in fact be removed or restored with the board supporting the battery already placed in its second seat in the cavity, bringing the second connector outside the cavity.

Further characteristics and advantages of the invention will be more evident from the following description of a preferred embodiment thereof, made with reference to the appended drawings. In such drawings:
- fig. 1 is a side view of an integrated control according to the present invention, in particular a left integrated control, seen from its inner side and with the sheath partially removed;
- fig. 2 is a side view of the integrated control of fig. 1, seen from its outer side and with the sheath partially removed;
- fig. 3 is an exploded perspective view of the integrated control of fig. 1, seen from its inner side;
- fig. 4 is an exploded perspective view of the integrated control of fig. 1, seen from its outer side;

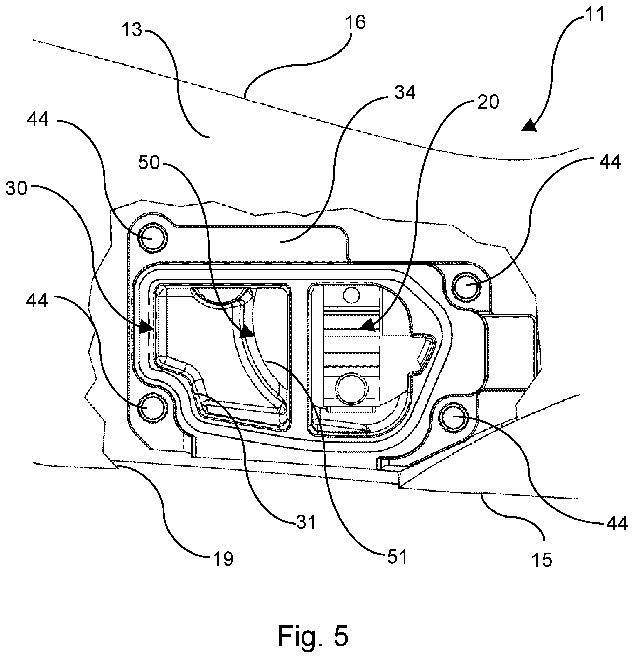

- fig. 5 is a side view of a detail of the integrated control of fig. 1, seen from its inner side, with parts removed to better show the cavity;

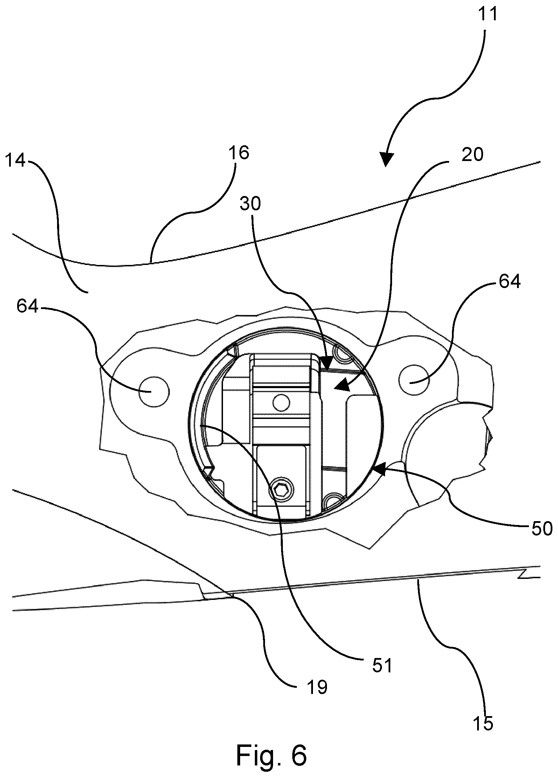

- fig. 6 is a side view of a detail of the integrated control of fig. 1, seen from its outer side, with parts removed to better show the cavity;
- fig. 7 is a perspective view of a variant of electronic board of the integrated control of fig. 1.

In the figures, a left integrated control **10** is shown, intended in particular for a bicycle provided with an electrically operated gearshift; in the following, this left integrated control 10 will be described, it being understood that the corresponding right integrated control (neither described nor illustrated) is identically symmetrical to the control 10.

The control 10 comprises a control body **11** provided with a rear abutment zone **12,** an inner flank **13** and an outer flank **14.** A lower side **15,** an upper side **16** as well as a front end **17,** which can be very pronounced forwards and upwards, are then defined on the control body 11. The abutment zone 12 is forced to rest against the handlebar of the bicycle, when the integrated control 10 is mounted on the handlebar. For fixing the control body 11 to the handlebar M, conventional means, not illustrated or described, are provided.

The control 10 comprises a brake lever **18,** extending downwards from the lower side 15 of the control body 11 and pivoted to the control body 10 according to a pivot axis **X,** transverse to the control body 10. The pivot axis X is located in a front zone of the control body 11, i.e. it is longitudinally spaced from the abutment zone 12.

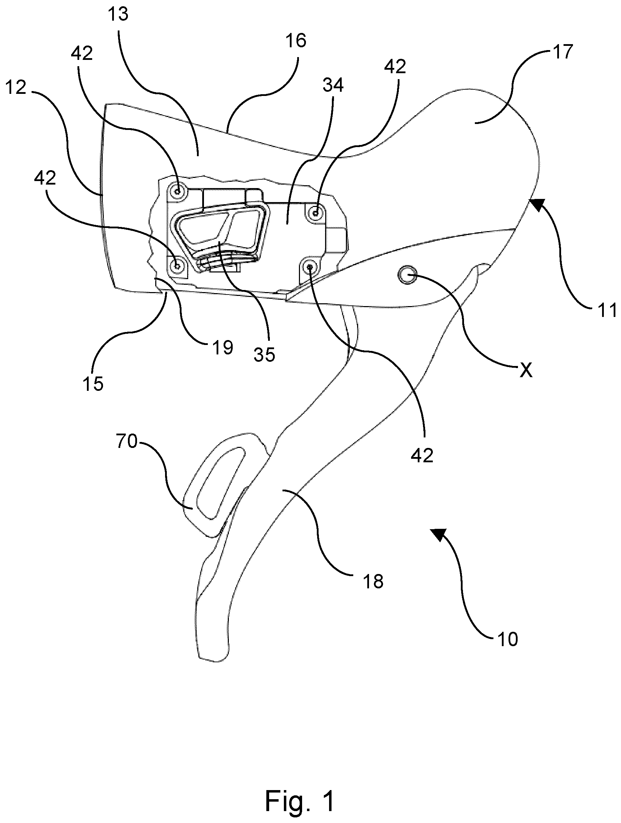

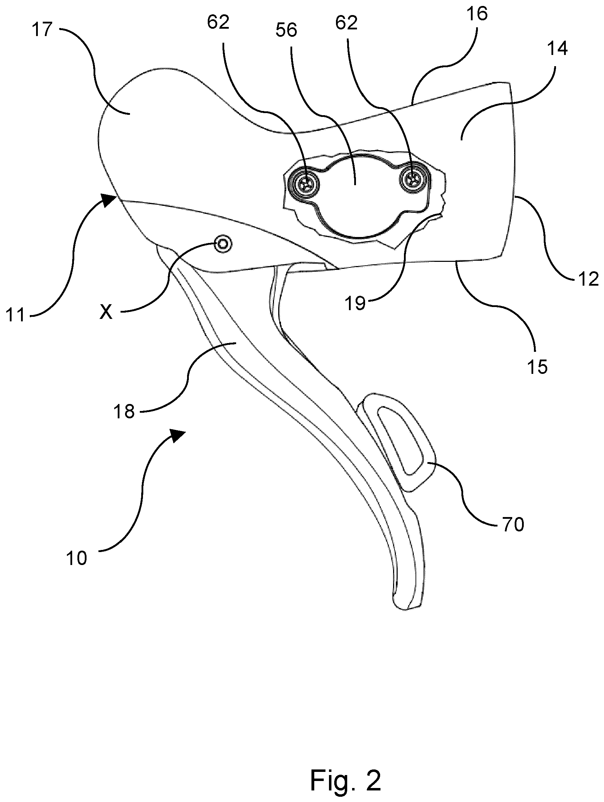

The control body 11 preferably comprises a coating sheath **19,** to favour a comfortable and safe grip by the cyclist; in figs. 1 and 2 the sheath 19 has been partially removed, to better show the control body 11.

Inside the control body 11, a cavity **20** is formed, accessible through a first opening **30** and a second opening **50.** The first opening 30 is formed on the inner flank 13 of the control body 11, between the rear abutment zone 12 and the transverse pivot axis X; preferably, the first opening 30 is closer to the rear abutment zone 12 than to the transverse pivot axis X. The second opening 50 is formed on a flank or side different from the inner flank 13. Preferably, as in the control 10 shown in the figures, the second opening 50 is formed on the outer flank 14, in a position substantially opposite to that of the first opening 30; it is however possible that the second opening 50 is placed on the lower side 15 or on the upper side 16.

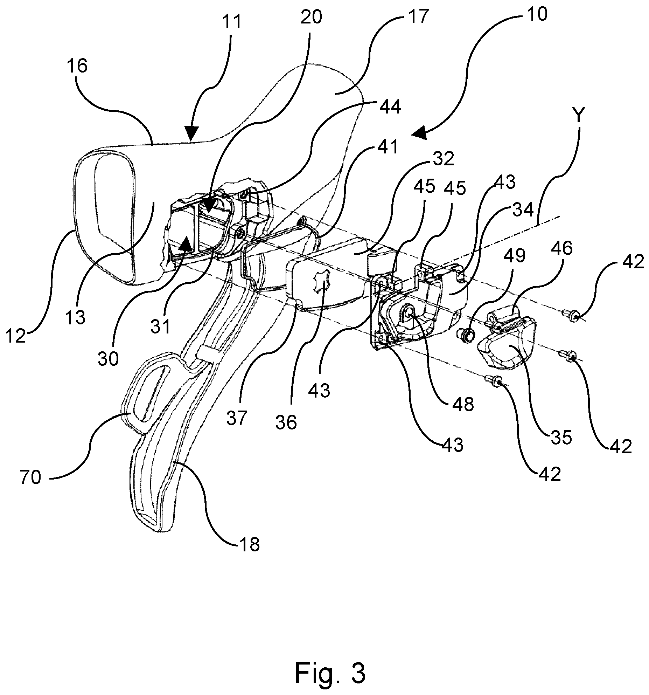

In the cavity 20, as is visible in fig. 3, a first seat **31** is formed facing the first opening 30; an electronic board **32** is housed in the first seat 31. The electronic board 32 is preferably incorporated in a polymeric coating that makes it waterproof.

Adjacent to the electronic board 32, a first plate **34** is then provided, which closes the first opening 30 and supports an actuator **35** of the control 10; the sheath 19 is interrupted around the actuator 35, so as to make it directly accessible to the fingers of a cyclist.

The electronic board 32 is provided with a switch **36** for controlling the gearshift of the bicycle and with a first electrical connector **37** formed on an edge of the electronic board 32.

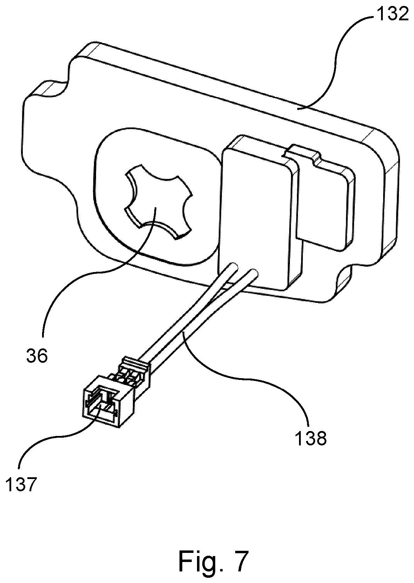

In an embodiment variant, shown in figure 7, an electronic board **132** is provided which - instead of having the first electrical connector 37 formed on an edge - has a first electrical connector **137,** placed at the end of a flexible cable **138** electrically connected to the electronic board 132. Otherwise, the electronic board 137 is the same as the electronic board 32, in particular it is provided with the switch 36.

A first gasket **41** ensures the sealed closure of the cavity 20 towards the inner flank 13 of the control body 11. If the electronic board 32 is waterproof, the first gasket 41 can be interposed between the electronic board 32 itself and the control body 11, as suggested in figure 3; otherwise, the gasket can be interposed between the first plate 34 and the control body 11.

Screws **42** are then provided inserted into through holes **43** formed in the first plate 34 and engaged in holes **44** formed in the control body 11. The sealed fixing of the first plate 34 to the control body 11 is thus ensured, closing the first opening 30.

For the support of the actuator 35, the first plate 34 is provided with two slots **45,** aligned according to a longitudinal pivot axis **Y;** correspondingly, the actuator 35 is provided at its top with a tubular seat **46,** longitudinally extended. A pin inserted in the slots 45 and in the tubular seat 46 ensures that the actuator 35 is pivoted to the first plate 34 (and consequently indirectly also to the control body 11) according to the longitudinal pivot axis Y, so that the actuator 35 can be shifted slightly angularly.

A through hole **48** is formed in the plate 34, in a position corresponding to the position of the switch 36 of the electronic board 32. A pusher **49,** in contact with the actuator 35 and with the switch 36, is slidably mounted in the through hole 48.

The actuator 35 is movable angularly by few degrees, sufficient to ensure that - when the actuator 35 is pressed - a central zone of the actuator 35 shifts transversely inwards with respect to the control body 11 and presses the pusher 49 against the switch 36 so as to obtain the sending of the desired shifting signal to the gearshift.

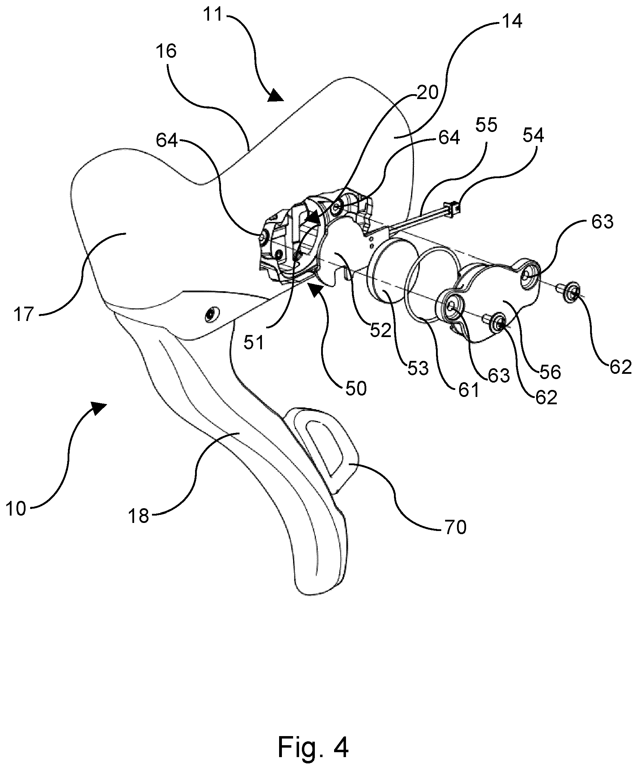

In the cavity 30, as is visible in fig. 4, a second seat **51** is formed facing the second opening 50; in the second seat 51 a board **52** supporting a battery **53** is housed; the board 52 is provided with a second electrical connector **54,** mounted at the end of a flexible cable **55.** The second electrical connector 54 is removably connected to the first electrical connector 37 on the electronic board 32.

Adjacent to the board 52, a second plate **56** is then provided, which closes the second opening 50.

A second gasket **61** is interposed between the second plate 56 and the control body 11, to ensure the sealed closure of the cavity 20 towards the outer flank 14 of the control body 11. Screws **62** are then provided inserted into through holes **63** formed in the second plate 56 and engaged in holes **64** formed in the control body 11. The sealed fixing of the second plate 56 to the control body 11 is thus ensured, closing the second opening 50.

The sheath 19 is not interrupted at the second plate 56, since on this second plate 56 there is no element that must be actuated by the cyclist's fingers, while the presence of the sheath is useful to favour the grip at the palm of the hand.

The integrated control 10 further comprises a further actuator **70,** for sending to the gearshift of the bicycle a shifting signal different from the shifting signal sent by the actuator 35. The further actuator 70 is - for example, according to a construction mode known per se - a lever alongside the brake lever 18 and pivoted to it according to a longitudinal pivot axis. The two different shifting signals that are sent by the actuator 35 and by the further actuator 70 are typically an upshifting signal and a downshifting signal.

The integrated control 10 is particularly advantageous during its assembly and even more during maintenance interventions.

In fact, during assembly, the electronic board 32 and the board 52 supporting the battery 53 can be easily placed independently in the respective seats, the first seat 31 and the second seat 51, by accessing the cavity 20 through the first opening 30 and the second opening 50, respectively.

The electrical connection between the two boards 32 and 52 is easily established when the board 52 has already been placed in its position in the second seat 51. To this end, the cable 55 allows the second electrical connector 54 to be brought outside of the cavity 20, through the first opening 30; at this point, the second electrical connector 54 can easily be connected to the first electrical connector 37, before the electronic board 32 is placed in the first seat 31. Subsequently, the battery 53 is placed on its board 52 and the electronic board 32 in its seat 31; finally, the first opening 30 and the second opening 50 are closed with the respective first plate 34 and second plate 56.

If the electronic board 132 of fig. 7 is used, in addition to the aforementioned mode, the reciprocal mode is possible, in which the electronic board 132 is first placed in its seat 31. Subsequently, the cable 138 allows the first electrical connector 137 to be brought outside of the cavity 20, through the second opening 50; at this point, the second electrical connector 54 can easily be connected to the first electrical connector 137, before the board 52 is placed in the second seat 51. Subsequently, the battery 53 is placed on its board 52 and finally the first opening 30 and the second opening 50 are closed with the respective first plate 34 and second plate 56.

For maintenance interventions, then, it is sufficient to free one between the first opening 30 and the second opening 50, depending on whether it must be intervened on the electronic board 32 or on the battery 53.

In particular, a relatively frequent intervention such as replacing the battery 53 can be easily performed without having to remove anything other than the second plate 56 (and possibly the sheath 19, if present); instead, it is not necessary to remove the electronic board 32 or disconnect the electrical connectors 37 and 54.

It should then be noted that all the electrical components of the control 10, namely the electronic board 32, the battery 53, the board 52 supporting the battery, the first electrical connector 37, the second electrical connector 54 as well as the cable 55, are well protected from water or dirt inside the cavity 20, since this is closed sealingly by the first plate 34 and by the second plate 56 with the relative first gasket 41 and second gasket 61.

## Claims

1. Integrated control for a gearshift and a brake of a bicycle, the integrated control comprising:
- a control body (11),
- a rear abutment zone (12) of the control body (11), intended to be in contact with a handlebar of the bicycle when the control is mounted on the handlebar,
- a brake lever (18) pivoted to the control body (11) according to a pivot axis (X) transverse to the control body (11), spaced from the rear abutment zone (12),
- an actuator (35) for driving the gearshift,
- a cavity (20) formed inside the control body (11),
- a gearshift drive electronic board (32; 132), housed inside the cavity (20) in a first seat (31),
- a battery (53) for powering the electronic board (32; 132), housed inside the cavity (20),
- a first opening (30) of the cavity (20), through which access to the electronic board (32; 132) is possible,
**characterized by** further comprising
- a second opening (50) of the cavity (20), distinct and separate from the first opening (30), through which access to the battery (53) is possible.

2. Integrated control according to claim 1, wherein the control body (11) comprises an inner flank (13), an outer flank (14), an upper side (16) and a lower side (15), wherein the first opening (30) is placed on the inner flank (13) of the control body (11).

3. Integrated control according to claim 1, wherein the control body (11) comprises an inner flank (13), an outer flank (14), an upper side (16) and a lower side (15), wherein the second opening (50) is placed on the outer flank (14) of the control body (11).

4. Integrated control according to claim 1, wherein the control body (11) comprises an inner flank (13), an outer flank (14), an upper side (16) and a lower side (15), wherein the second opening (50) is placed on the lower side (15) of the control body (11).

5. Integrated control according to claim 1, wherein the control body (11) comprises an inner flank (13), an outer flank (14), an upper side (16) and a lower side (15), wherein the second opening (50) is placed on the upper side (16) of the control body (11).

6. Integrated control according to claim 1, wherein the actuator (35) is placed on the control body (11) and the first opening (30) is placed at the actuator (35).

7. Integrated control according to claim 6, wherein the first opening (30) is closed by a first plate (34), on which the actuator (35) is mounted.

8. Integrated control according to claim 1, wherein the second opening (50) is closed by a second plate (56).

9. Integrated control according to claim 1, comprising a board (52) supporting the battery (53), housed in a second seat (51) formed in the cavity (20).

10. Integrated control according to claim 9, wherein the electronic board (32; 132) is provided with a first electrical connector (37; 137) and the board (52) supporting the battery (53) is provided with a second electrical connector (54), wherein the first electrical connector (37; 137) is removably connected to the second electrical connector (54).

11. Integrated control according to claim 10, wherein the first electrical connector (137) is mounted at an end of a flexible cable (138).

12. Integrated control according to claim 10, wherein the second electrical connector (54) is mounted at an end of a flexible cable (55).
